# EUROPEAN PATENT SPECIFICATION

(11) **EP 3 853 594 B1**
(45) Date of publication and mention of the grant of the patent: **21.02.2024**
(21) Application number: 19783127.4
(22) Date of filing: 18.09.2019
(51) Int. Cl.: G01N 22/04, A24C 5/34

(54) **ELECTROMAGNETIC DETECTOR FOR DETECTING PROPERTIES OF PRODUCTS OF THE TOBACCO INDUSTRY**
ELEKTROMAGNETISCHER DETEKTOR ZUR ERFASSUNG VON EIGENSCHAFTEN VON PRODUKTEN DER TABAKVERARBEITENDEN INDUSTRIE
DÉTECTEUR ÉLECTROMAGNÉTIQUE POUR LA DÉTECTION DE PROPRIÉTÉS DE PRODUITS DE L'INDUSTRIE DU TABAC

(30) Priority: 21.09.2018 IT 201800008795
(43) Date of publication of application: 28.07.2021
(73) Proprietor: G.D S.p.A., 40133 Bologna (IT)
(72) Inventor: MENGOLI, Fausto, 40133 Bologna (IT); GALLI, Mauro, 40133 Bologna (IT); SARTONI, Massimo, 40133 Bologna (IT)
(74) Representative: Persi, Patrizia
(86) International application number: PCT/IB2019/057860
(87) International publication number: WO 2020/058871

(56) References cited:
- EP-A1- 0 555 875
- EP-A1- 3 176 567
- EP-A2- 2 641 487
- EP-A2- 2 674 045
- EP-B1- 0 555 875
- US-A1- 2015 257 437
- US-A1- 2018 027 868

## Description

This invention relates to an electromagnetic detector for detecting one or more properties of a product, for example a rod-shaped article, or a semi-finished product, of the tobacco industry.

In particular, this invention is intended for making an electromagnetic detector, in which an electromagnetic field is located, which comprises a detecting channel open on three sides to allow the product to pass through the electromagnetic detector along a pass-through direction.

The electromagnetic detector according to this invention is a detector substantially having a U or a C shape, through which it is possible to pass the product whose properties must be detected, in the pass-through direction or in which the product can be inserted and extracted in a movement direction, perpendicular to the pass-through direction. Such detectors are, in general, known from document EP 3 176 567.

The term "product" in this context means an elongate rod-shaped article, which may be a finished article intended for sale (for example: cigarettes, cigars, cigarillos, etc.) or a piece of it (for example: a piece containing tobacco, a piece of filter for example containing one or more capsules or combinations of them).

At present, it is possible to make very complex cigarettes comprising series of coaxial pieces of different types and composition and, generically, the term "cigarette" refers to an article for the tobacco industry comprising an active portion intended to release a substance to be inhaled.

The active portion may comprise only tobacco to be burned or other components, or it may comprise at least one piece of tobacco defining an aerosol-generating element or a heat-not-burn type tobacco containing product. In other words, at present, the term "cigarette" may also refer to an electronic cigarette in which the tobacco is heated to generate aerosol. While the rod-shaped articles are being made and packaged, it is important to carry out checks on quality so as to verify that they comply with requirements and meet predetermined acceptability criteria. Such checks are carried out by detecting properties of the articles, such as the density and/or humidity, which can be used to arrive at the weight of the article. For example, relative to pieces of filter with capsules, in order to detect the presence of the capsules in the filter, the density and/or humidity characteristics of each capsule are detected and the characteristics of each capsule in the filter are used to determine its position and/or its integrity.

However, in this context the term "product" also indicates a semi-finished product intended to be wrapped.

Indeed, in the tobacco industry, there is a wide variety of situations in which it is necessary to wrap a suitable semi-finished product (for example tobacco or filter material) using a wrapping material for making a rod which is then destined to be divided, in subsequent steps of the production process, until it forms the elongate article to be made, or the piece of it. By detecting some of the properties of the semi-finished product, such as density and/or humidity, it is possible to carry out a quality check on the rod, ensuring that the rod is made correctly and therefore that ultimately the finished article is made correctly.

A known way of carrying out the checks on the cigarettes, on the pieces, or on the semi-finished product is to provide inside the machines a plurality of electromagnetic detectors substantially having the shape of cylinders with a circular U, or C-shaped cross-section, to analyse the products in different steps of their production and packaging process, so as to allow the rejection of non-conforming articles and identification of faults and malfunctions of some machine components. The electromagnetic detectors, by creating an electromagnetic field with electromagnetic waves, are able to pass through the product, detecting one or more properties of the article, or of the semi-finished product.

The types of detections and checks which can be carried out vary based on requirements and on the type of article which is produced.

For example, in order to detect the characteristics of the capsules in the filters, the checks are usually performed at rotary drums which have cradle-shaped suction seats, called "couvettes", at whose periphery the articles to be checked are held. The electromagnetic detector is positioned in front of the drum and scans/detects the articles held by the drum as they are fed so as to proceed with a detection of their characteristic properties. During the check, the articles pass through the detector in the pass-through direction.

If, in contrast, checks must be carried out on the formed rod, in which the semi-finished product is already completely wrapped in a web of wrapping material, in the prior art the electromagnetic detector is positioned before the rod is wrapped if the web of wrapping material has portions which are metallic, or at least partly metallized. Considering, for example, machines for the production of continuous rods of tobacco, which usually use a substantially vertical flue fed at the bottom by a continuous flow of tobacco particles, at the top end of which a belt, preferably a suction belt is positioned, on which a continuous mass of tobacco forms, it is known from document WO2016162292 that the electromagnetic detector is integrated in a channel defined by the suction belt.

The electromagnetic detector allows the suction belt and the tobacco held by it to pass through it.

In this way, it is possible to check a quantity of tobacco which is transferred at infeed to a continuous rod forming beam, positioned downstream of the suction flue, in such a way as to ensure that the articles resulting from that production process have a correct quantity of tobacco in them.

The same considerations also apply for other types of semi-finished product which can be used to make a continuous rod wrapped in metallized paper, which may be, for example, a material intended to generate aerosol, a mass of tobacco fibre, a bar of filter material, a homogeneous or heterogeneous series of pieces of filter material or a bar of material derived from the tobacco.

In these cases too, the detector must be positioned before the rod is wrapped.

Therefore, according to what is described above, it is becoming very widespread in machines for making articles of the tobacco industry, both for detecting properties of finished articles and of pieces of them, and for detecting properties of a semi-finished product, to use electromagnetic detectors capable of generating an electromagnetic field in a detecting channel open on three sides, in which the electromagnetic field is located and through which the product to be checked passes in a pass-through direction.

The Applicant observed that, over time, instabilities may arise in the checks carried out by such electromagnetic detectors and that such instabilities are mainly due to the presence of extraneous bodies in those detectors which modify the electromagnetic field in an unpredictable way. A machine of the tobacco industry is, by definition, in many zones of it, an environment in which there may be unwanted fluid substances present such as any liquids, for example oily substances, or gases, such as conditioned air, which contain, for example, a percentage of humidity different to that of the tobacco and/or an environment in which there may be extraneous bodies present in suspension, such as grains of dust, fine dust, particles of tobacco or of other materials.

The grains of dust, or the particles of tobacco or of other unwanted material, may be deposited and build up in cracks or splits present in the detecting channel of a detector. Since it is not possible to establish beforehand the position or the moment of build-up of such extraneous bodies in the detecting channel, the detection of the characteristic properties of the product may be subject to unexpected interference, since the detection itself is unexpectedly distorted.

As a result, the electromagnetic detector could indicate a fault situation and the products checked by the detector could be considered defective since they have unacceptable quality characteristics, even if the products checked are in reality free of defects. In other words, it is not possible to know beforehand if a fault situation identified by the electromagnetic detector corresponds precisely to a real defect of the product checked or if the fault situation corresponds to interference due to the build-up of extraneous bodies in the detecting channel.

At present, in order to improve measurement, there are frequent manual cleaning procedures carried out by a machine operator, which involve cleaning the detecting channel with a predetermined frequency. However, this is not enough to guarantee the absence of interference in the measurement, since such manual cleaning might not completely remove all of the extraneous bodies from the machine zone in which the electromagnetic detector is present and, therefore, such extraneous bodies could be deposited in the detecting channel after the cleaning procedure. In addition, it is known to use compressed air to control the atmosphere around parts of tobacco handling machinery, such as in document EP 2 641 487.

In this context, the technical purpose which forms the basis of this invention is to propose an electromagnetic detector which overcomes at least some of the above-mentioned disadvantages of the prior art.

In particular, it is the aim of this invention to provide an electromagnetic detector capable of guaranteeing a correct detection of properties of a product of the tobacco industry even in the presence of extraneous bodies in suspension.

Another aim of this invention is to provide an electromagnetic detector capable of preventing the unwanted entry of unwanted fluid substances and/or extraneous bodies into the detector itself.

Another different aim of this invention is to provide an electromagnetic detector capable of making any unwanted fluid substances and/or extraneous bodies present in the detector come out.

The technical purpose specified and the aims indicated are substantially achieved by different embodiments of the invention.

The aims are also achieved by further characteristics described below, including the technical characteristics set out in one or more of the appended claims.

Further characteristics and advantages of this invention will be more apparent from the approximate, non-limiting description of a preferred, non-limiting embodiment of an electromagnetic detector, as illustrated in the accompanying drawings in which:
Figure 1 is a perspective view of the electromagnetic resonator according to this invention which comprises a detecting channel and emitting connector and a receiving connector which are fixed to a base wall;
Figure 2 shows a different perspective view of the microwave resonator of Figure 1;
Figure 3 shows a view of the electromagnetic resonator of Figure 1 from the side of an emitting connector and of a receiving connector;
Figure 4 shows a front view of the electromagnetic resonator of Figure 1;
Figure 5 shows a view of the electromagnetic resonator of Figure 1 from the side opposite to that of the emitting connector and of the receiving connector;
Figure 6 shows a cross-section along a cross-section plane VI - VI of

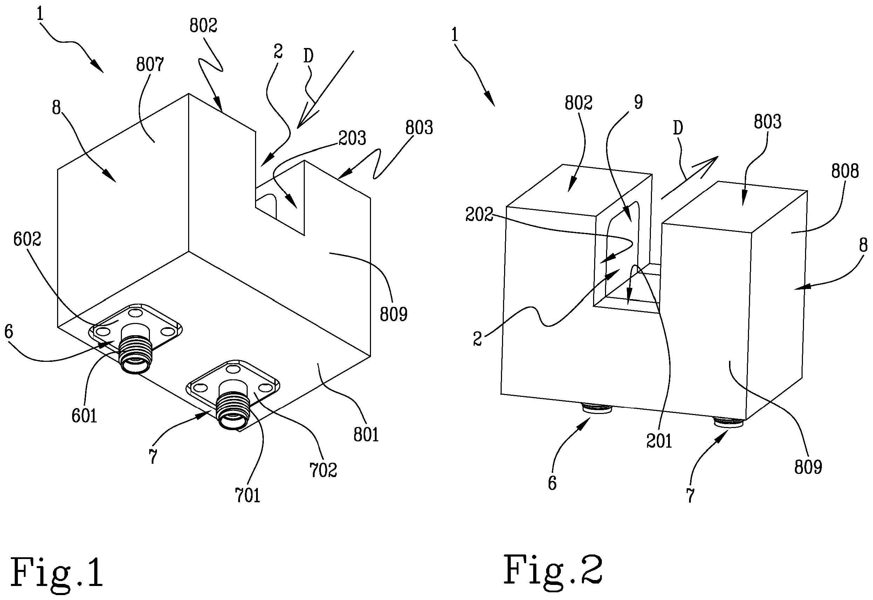

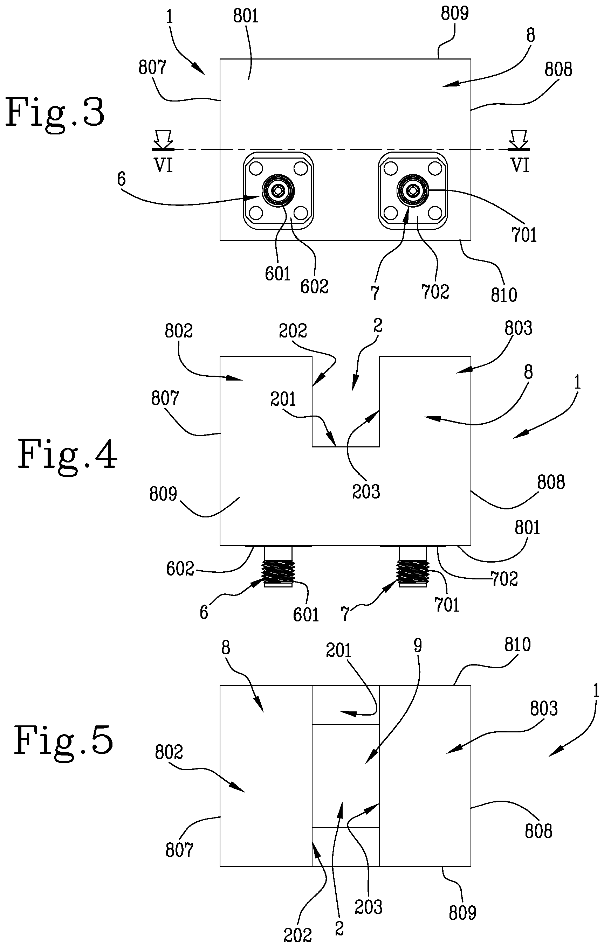

Figure 3 of the electromagnetic resonator of Figure 1 comprising an emitting shell, a receiving shell, a dielectric sheath interposed between the two shells, an emitting probe and a receiving probe;

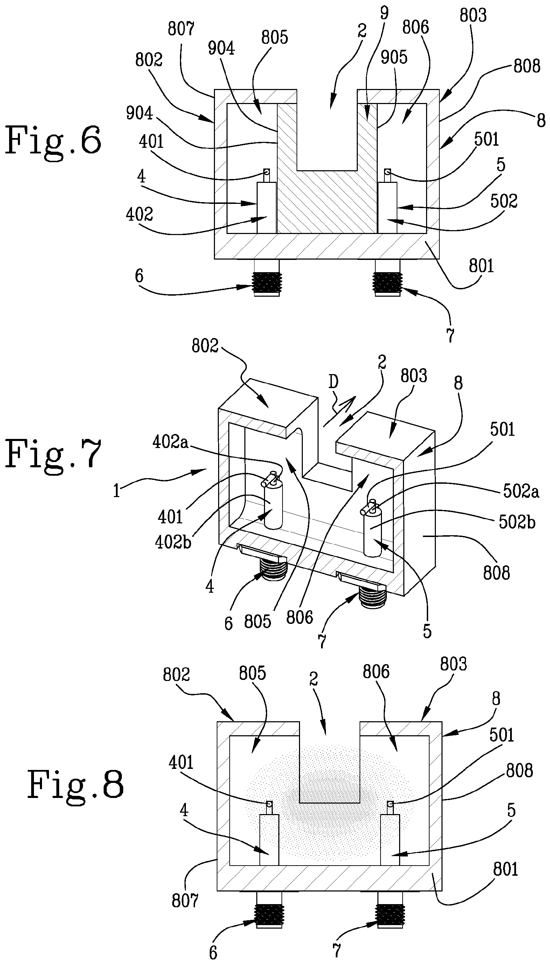

Figure 7 shows a perspective view of the electromagnetic detector in cross-section of Figure 6, with some parts removed for clarity;
Figure 8 shows the cross-section view of Figure 6, with some parts removed for clarity, with a distribution of intensity of the electromagnetic field;

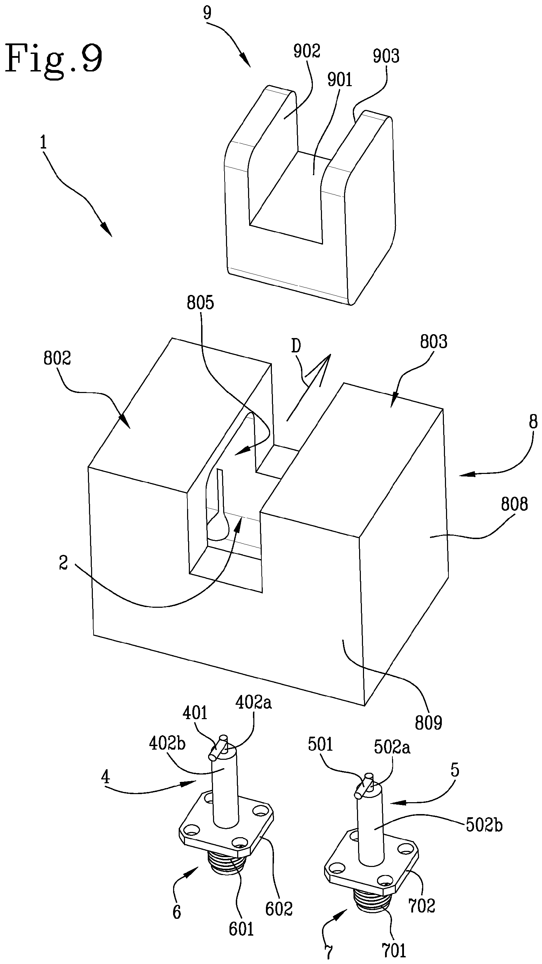

Figure 9 shows an exploded view of the electromagnetic detector of Figure 1;

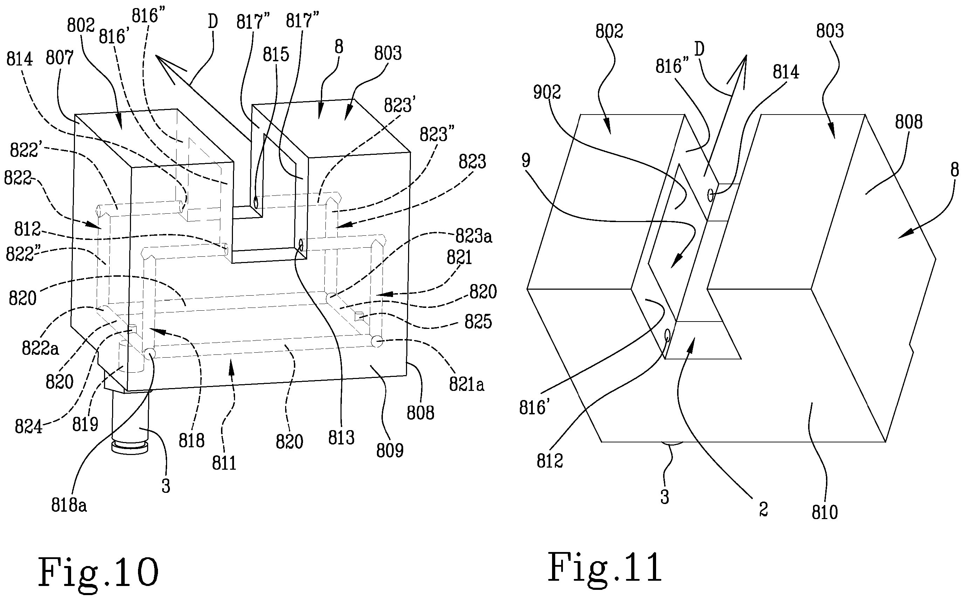

Figure 10 shows a perspective view of a variant of the electromagnetic detector of Figure 1, with some parts removed for clarity, in which the electromagnetic detector comprises a cleaning circuit configured to deliver compressed air into the detecting channel;
Figure 11 shows a different perspective view of the electromagnetic resonator of Figure 10;

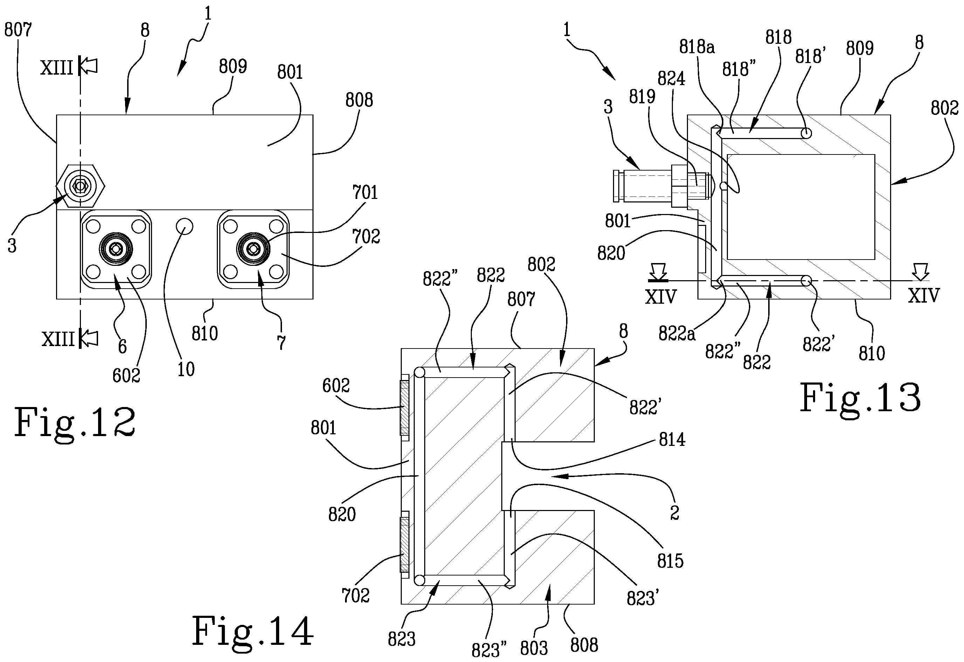

Figure 12 shows a view of the electromagnetic resonator of Figure 10 from the side of the emitting connector, of the receiving connector and of a compressed air feed connector;
Figure 13 shows a cross-section view along a cross-section plane XIII - XIII of Figure 12 of the electromagnetic resonator of Figure 10;
Figure 14 shows a cross-section view along the cross-section plane XIV - XIV of Figure 13 of the electromagnetic resonator of Figure 10.

Hereinafter the same elements will be referred to using the same numbers for the various figures.

Figures 1 to 9 show an electromagnetic detector 1, hereinafter indicated more simply as a detector, for detecting one or more properties of a product (not illustrated) of the tobacco industry. The product may be a rod-shaped article, or a semi-finished product. What the term "product" means has been described in detail previously and for brevity will not be repeated now.

The properties of the rod-shaped articles which can be detected by the detector 1 may be, for example: weight, dimensions, materials, type of pieces included in the article, distribution of the tobacco, positioning of the pieces relative to the article, presence of capsules and establishment of parameters for identifying the integrity and the position of each capsule in the piece of article.

The properties of a semi-finished product which can be detected by the detector 1 may be, for example: weight or density of the semi-finished product, for example before it is wrapped with metallized paper (or paper containing metallic particles).

As has already been described, the electromagnetic detector 1 according to this invention may advantageously be used in various machines of the tobacco industry.

The resonator 1 comprises a detecting channel 2 which is open on three sides to allow the product to pass through the detector 1 along a pass-through direction D.

It should be noticed that the detecting channel 2 extends longitudinally and has a longitudinal axis of extension parallel to the pass-through direction D.

In the preferred embodiment of the resonator 1, shown in Figures 1 to 14, the detector 1 has the shape of a U or a C and the detecting channel 2 has the shape of a parallelepiped with a rectangular cross-section, as described below.

Located in the detecting channel 2 there is an electromagnetic field, hereinafter more simply referred to as the field, shown in Figure 8, which is oriented mainly in a detecting direction which corresponds to the pass-through direction D. It should be noticed that an intensity of the electromagnetic field is at its maximum near a central area of the detecting channel 2 in which the product to be inspected will pass.

The detector 1 comprises an emitting probe 4 for creating the field and a receiving probe 5 to receive a field altered by the presence of the product. The emitting probe 4 and the receiving probe 5 are positioned inside the detector 1.

As shown in Figure 6 to 8, the emitting probe 4 and the receiving probe 5 have an angled shape and comprise, respectively, a terminal emitting portion 401 and a terminal receiving portion 501 which are parallel to the direction of the detection field.

The term "angled shape" means that both the emitting probe 4 and the receiving probe 5 have at least one angle.

In other words, the emitting probe 4 has at least one angle and comprises a terminal emitting portion 401 parallel to the direction of the detection field; the receiving probe 5 has at least one angle and comprises a terminal receiving portion 501 parallel to the direction of the detection field.

The emitting probe 4 and the receiving probe 5 additionally comprise respectively an initial emitting portion 402 and an initial receiving portion 502. The initial emitting portion 402 forms an angle with the terminal emitting portion 401, the initial receiving portion 502 forms an angle with the terminal receiving portion 501 to connect the detector 1 towards the outside.

Thanks to the emitting probe 4 and the receiving probe 5 which have the respective terminal emitting portion 401 and the respective terminal receiving portion 501 parallel to the pass-through direction D, the electromagnetic field created in the detecting channel 2 is oriented in the same direction as the pass-through direction D.

However, since the emitting probe 4 and the receiving probe 5 are angled, that is to say, since both the emitting probe 4 and the receiving probe 5 have at least one angle, it is no longer necessary to position the emitting probe 4 and the receiving probe 5 parallel to the detecting channel 2.

In this way, a connection to an external control unit (not illustrated) is simplified. Indeed, based on the machine zone in which the detector 1 must be placed, the angling of the emitting probe 4 and of the transmitting probe 5 may be different, consequently facilitating the design of the detector 1.

It may be noticed that the terminal emitting portion 401 and the terminal receiving portion 501 are filiform-shaped and parallel to each other.

It should also be noticed that they have the same length.

The terminal emitting portion 401 and the terminal receiving portion 501 extend linearly.

Thanks to the fact that the terminal emitting portion 401 and the terminal receiving portion 501 are parallel to each other, great effectiveness is guaranteed in the creation of the field.

The detector 1 comprises un external emitting connector 6 and an external receiving connector 7 to connect the detector 1 respectively to an emitter (not illustrated) and to a receiver (not illustrated) of the control unit of an apparatus of a machine of the tobacco industry (not illustrated) in which the detector 1 is installable.

The initial emitting portion 402 and the initial receiving portion 502 connect, respectively, the terminal emitting portion 401 to the external emitting connector 6 and the terminal receiving portion 501 to the external receiving connector 7.

It should be noticed that each initial portion 402, 502, between the initial emitting portion 402 and the initial receiving portion 502, comprises a respective first stretch 402a, 502a, which is filiform-shaped and connected to the terminal portion 401, 501, and a respective second stretch 402b, 502b, also filiform-shaped, which is surrounded by insulating material and connected to the respective external connector 6, 7.

According to a version not illustrated, the initial portion 402, 502, is entirely filiform-shaped and the insulating material of the second stretch 402b, 502b is absent.

Preferably, the initial emitting portion 402, angled relative to the terminal emitting portion 401 is straight and extends along a single axis of extension (not illustrated). Since the initial emitting portion 402 is not further angled, the external emitting connector 6 extends coaxially and aligned with the initial emitting portion 402. Between the initial emitting portion 402 and the terminal emitting portion 401 an angle is defined which determines the placing of the external emitting connector 6.

The same considerations apply for the initial receiving portion 502 and for the external receiving connector 7 which extends coaxially and aligned with the initial receiving portion 502.

As illustrated at least in Figures 7 and 9, the initial emitting portion 402 and the initial receiving portion 502 are perpendicular to the terminal emitting portion 401 and to the terminal receiving portion 501, respectively, and, that is to say, an angle equal to 90° is defined between them.

Moreover, the initial emitting portion 402 and the initial receiving portion 502 are parallel to each other and lie in a single second plane, not illustrated, which is perpendicular to a first plane, not illustrated, which the terminal emitting portion 401 and the terminal receiving portion 502 lie in. In other words, the emitting probe 4 and the receiving probe 5 are the same as each other and are placed in the resonator 1 parallel to each other, as shown in Figures 6 to 9. In this way, advantageously, the emitting connector 6 and the receiving connector 7 may be positioned side by side in the same wall of the resonator 1, greatly simplifying the connections necessary with the control unit and making the resonator itself as compact as possible, when installed in a machine.

The electromagnetic detector 1 comprises a body 8, which is hollow and is provided with a base wall 801, an emitting half-shell 802 and a receiving half-shell 803. The emitting half-shell 802 and the receiving half-shell 803 extend from the base wall 801.

In detail, the emitting half-shell 802 and the receiving half-shell 803 are parallel to each other.

It should be noticed that the emitting half-shell 802 and the receiving half-shell 803 may be made separately and then joined together to make the hollow body 8. Without restricting the scope of the invention, the hollow body 8 may also be made as a single body, as illustrated in the accompanying figures, and guarantee the same functions of the two half-shells 802, 803.

The detecting channel 2 is positioned between the emitting half-shell 802 and the receiving half-shell 803.

The external emitting connector 6 and the external receiving connector 7 are fixed to the base wall 801.

In detail, the external emitting connector 6 and the external receiving connector 7 comprise respective connecting portions 601, 701 and respective fixing plates 602, 702 which are housed in respective compartments of the base wall 801. In this way, on the outside of the resonator 1 there is a reduction in the dimensions of the emitting connector 6 and of the receiving connector 7, leaving available only the connecting portions 601, 701.

According to one variant not illustrated, the emitting probe 4 and the receiving probe 5 are angled but between the terminal emitting portion 401 and the initial emitting portion 402 and between the terminal receiving portion 501 and the initial receiving portion 502 angles other than 90° are defined. The fact remains that the terminal emitting portion 401 and the terminal receiving portion 501 are parallel to each other and are parallel to the pass-through direction D.

For example, the emitting connector 6 and the receiving connector 7 may be fixed in the base wall 801 but the initial emitting portion 402 and the initial receiving portion 502 may be inclined both relative to the base wall 801 and relative to the terminal emitting portion 401 and to the terminal receiving portion 501.

The detector 1 additionally comprises a bottom wall 201, which delimits the bottom of the detecting channel 2 and connects the emitting half-shell 802 and the receiving half-shell 803 to each other. It should be noticed that, in the detector 1 described herein, the bottom wall 201 is flat, is parallel to the base wall 801 and is perpendicular to the emitting half-shell 802 and to the receiving half-shell 803. Alternatively, the bottom wall 201 could even be curved.

The detector 1 also comprises a dielectric sheath 9, housed in the body 8 and centrally interposed between the emitting half-shell 802 and the receiving half-shell 803, and which is surrounded by the emitting half-shell 802 and by the receiving half-shell 803. The dielectric sheath is made of polymeric material, for example HDPE high-density polyethylene, having characteristics such that it does not generate distortion and/or interference of the electromagnetic field in the detector 1.

The dielectric sheath 9 comprises a bottom zone 901 forming part of the bottom wall 201. In addition, the dielectric sheath 9 comprises an emitting zone 902 and a receiving zone 903 which face each other to define, in between them, a detecting chamber forming part of the detecting channel 2 in which the field is located, as described in more detail below.

If the detector 1 is a microwave resonator, for example operating at a wavelength of between 10⁸ and 10¹² Hz to measure the density and/or the humidity of the product, the detecting chamber is a resonance chamber. Alternatively, the detector 1 may be a capacitive measuring device.

The dielectric sheath 9 internally delimits in the detector 1 an emitting cavity 805 in the emitting half-shell 802 and a receiving cavity 806 in the receiving half-shell 803.

As shown in Figures 6 and 9, the dielectric sheath 9 extends as far as the base wall 801 and makes contact with the base wall 801. Optionally, in a version not illustrated, the dielectric sheath 9 is fixed to the body 8 in zones unaffected by the electromagnetic field and is not in contact with the base wall 801.

Advantageously, the dielectric sheath 9 allows noticeable improvement of the efficiency and effectiveness of the detector 1, since it provides a protective barrier which prevents the access of unwanted external agents, for example dust, into the emitting cavity 805 and the receiving cavity 806, defines the detecting chamber and allows optimization of the measuring process by promoting concentration and homogenization of the radiation transmitted by the emitting probe 4 inside the detecting chamber, also optimizing its reception by the receiving probe 5.

The emitting probe 4 is positioned in the emitting cavity 805, the receiving probe 5 is positioned in the receiving cavity 806.

Indeed, the dielectric sheath 9 comprises an emitting panel 904 which at least partly delimits the emitting cavity 805, and a receiving panel 905 which at least partly delimits the receiving cavity 806.

It should be noticed that the dielectric sheath 9, as shown in Figure 9, has the shape of a U-shaped or C-shaped collar, and that the emitting panel 904 and the receiving panel 905 are opposite panels, parallel to each other, which are perpendicular to the bottom wall 201 and which externally delimit the dielectric sheath 9.

The initial emitting portion 402 is close to the emitting panel 904 and the initial receiving portion 502 is close to the receiving panel 905.

In detail, the second stretch 402b of the initial emitting portion 402 is in contact with the emitting panel 904. The second stretch 502b of the initial receiving portion 502 is in contact with the receiving panel 905.

It should be noticed that the body 8 additionally comprises an emitting side wall 807 and a receiving side wall 808 which face each other, extend from the base wall 801 and laterally delimit the emitting half-shell 802 and the receiving half-shell 803, respectively.

Moreover, the body 8 comprises a front wall 809 and a rear wall 810 which also face each other, extend from the base wall 801, have the shape of a U or a C and are positioned between the emitting side wall 807 and the receiving side wall 808 to frontally delimit the emitting half-shell 802 and the receiving half-shell 803.

The front wall 809 and the rear wall 810 therefore comprise a respective front opening and a respective rear opening which define the ends of the detecting channel 2.

The initial emitting portion 402 and the initial receiving portion 502 are close to the rear wall 810. However, there must not be any contact between each filiform-shaped first stretch 402a, 502a (or the entire initial emitting portion 402 and the entire initial receiving portion if they are entirely filiform-shaped) and the rear wall 810. Preferably, the distance between each filiform-shaped first stretch 402a, 502a and the rear wall 810 is equal to at least 0.5 mm.

The terminal emitting portion 401 and the terminal receiving portion 501 are positioned to face towards the front wall 809.

As already indicated, the terminal emitting portion 401 and the terminal receiving portion 501 are linear. In detail, the terminal emitting portion 401 and the terminal receiving portion 501 have a length included in a range from 0.5 mm to a maximum length where each terminal portion 401, 501 extends until near the front wall 809 (without touching it).

As already indicated, the detector 1 may be installed in an apparatus forming part of a machine of the tobacco industry.

If the apparatus is an apparatus for conveying and inspecting a semi-finished product containing tobacco particles, the apparatus may comprise a belt conveyor (not illustrated) configured to hold and convey the semi-finished product along a conveying path which comprises a guide channel (not illustrated) delimited at the sides by two side walls and at the top by a belt, perforated or porous, preferably a suction belt (not illustrated).

The apparatus may also comprise the detector 1 according to this invention for detecting properties of the semi-finished product for the purposes of inspection of the self-same semi-finished product.

In this case, the detecting channel 2 is configured to slidably receive, in the pass-through direction D, at least one portion of the suction belt and at least one portion of the semi-finished product held on the belt.

The detecting channel 2 is also configured to receive guide elements (not illustrated) of the side walls of the conveyor, which delimit the suction belt in a localized way, that is to say, at the detecting channel 2.

The guide elements are made of a polymeric material, for example the same polymeric material as the dielectric sheath 9, such that they do not generate distortion and/or interference of the electromagnetic field in the resonator 1.

Advantageously, the presence of the angled emitting probe 4 and receiving probe 5 allows the obtainment of a detector 1 in which the emitting connector 6 and the receiving connector 7 come out of the detector transversally relative to the belt.

If, preferably, the detector 1 is positioned below the belt, that is to say, the bottom wall 201 of the detecting channel 2 is under the belt, then the emitting connector 6 and the receiving connector 7 come out downward and are easily connectable to the control unit of the apparatus for conveying and inspecting.

In use, the terminal emitting portion 401 of the emitting probe and the respective terminal receiving portion 501 of the receiving probe 5, which are positioned parallel to the pass-through direction D, create and respectively receive a field in the detecting channel 2 oriented in the same direction as the pass-through direction D, which is in particular concentrated in the detecting chamber defined between the emitting zone 902 and the receiving zone 903 of the dielectric sheath 9.

Since the emitting probe 4 and the receiving probe 5 are shaped with at least one angle, between the terminal emitting portion 401, the terminal receiving portion 501 and respectively the initial emitting portion 402 and the initial receiving portion 502, connection of the detector 1 towards the outside is simplified.

Figures 10 to 14 show a detector 1 according to this invention, which comprises a cleaning circuit 811 for removing any unwanted fluid substances and/or extraneous bodies from the detecting channel 2 which may also advantageously be used in the detector 1 of Figures 1 to 9. The parts of the electromagnetic detector 1 of Figures 10 to 14 common to the electromagnetic detector of Figures 1 to 9 will be labelled using the same reference numbers already used in those figures and will not be described again in detail.

With the terminology indicated, without restricting the scope of the invention, unwanted fluid substances herein also refer to any liquids or gases which contain, for example a percentage of humidity which could compromise the detection performed by the detector 1. Moreover, with the terminology indicated, without restricting the scope of the invention, extraneous bodies herein also refer to any dusty deposits of any kind, including residues of the semi-finished product or of other materials present in the environment, even such as tobacco particles released in an unwanted way by the belt, and even grains of dust, fine dust, other particles of tobacco or of other materials.

The cleaning circuit 811, shown in Figure 10 and 11, is configured to deliver, that is to say, to blow, compressed air, preferably into the detecting channel 2.

Thanks to the delivery of compressed air into the detecting channel 2, the cleaning circuit 811 guarantees the removal of any unwanted fluid substances and/or unwanted extraneous bodies which may be present in it and also guarantees that any unwanted fluid substances and/or bodies in suspension in the machine zone in which the detector 1 is installed do not enter the detecting channel 2.

Consequently, thanks to the cleaning circuit 811 of the detector 1, there is guaranteed absence of extraneous bodies in the detecting channel 2 in which the field is located and, therefore, correct detection of the characteristics of the product is guaranteed, unaffected by the environment in which the detector is installed.

The compressed air delivered by the cleaning circuit 811 is, preferably, microfiltered and free of humidity.

As already indicated, the detector 1 comprises a body 8, which is hollow and comprises a base wall 801, an emitting half-shell 802 and a receiving half-shell 803 which extend from the base wall 801.

As also already indicated, the emitting half-shell 802 and the receiving half-shell 803 are parallel to each other and the detector 1 comprises a dielectric sheath 9 housed in the body 8, the sheath being centrally interposed between the emitting half-shell 802 and the receiving half-shell 803 and surrounded by the emitting half-shell 802 and by the receiving half-shell (803), the dielectric sheath 9 delimiting in the resonator 1 the emitting cavity 805 in the emitting half-shell 802 and the receiving cavity 806 in the receiving half-shell 803.

Advantageously, the cleaning circuit 811 is entirely formed in the body 8 of the detector 1.

The cleaning circuit 811 comprises at least a first cleaning opening 812 in the emitting half-shell 802, or the receiving half-shell 803 to deliver compressed air from the emitting half-shell 802, or the receiving half-shell 803.

In other words, the first cleaning opening 812 may be in either the emitting half-shell 802 or the receiving half-shell 803.

The delivery of compressed air from the emitting half-shell 802, or the receiving half-shell 803, into the detecting channel 2 allows effective cleaning since a directional air jet is delivered towards the detecting channel 1 itself.

Preferably, the air jet emitted from the emitting half-shell 802, or the receiving half-shell 803, is directed along the longitudinal axis of extension of the detecting channel 2 so as to make the compressed air come out longitudinally and convey out of the detecting channel 2 any unwanted fluid substances and/or extraneous bodies present in it. In other words, the first cleaning opening 812 is positioned in the emitting half-shell 802, or receiving half-shell 803, in a way suitable for creating a longitudinal cleaning flow (not shown) in the detecting channel 2 directed towards the outside of the detecting channel 2.

In addition, the cleaning circuit comprises a second cleaning opening 813 in the receiving half-shell 803, or the emitting half-shell 802, to deliver compressed air from the receiving half-shell 803, or the emitting half-shell 802.

In other words, if the first cleaning opening 812 may be positioned in either the emitting half-shell 802 or the receiving half-shell 803, the second cleaning opening 813 is positioned in the other shell.

Advantageously, the second cleaning opening 813 delivers, preferably, an air jet directed towards the detecting channel 2 so that there is cleaning from both of the half-shells 802, 803 of the detecting channel 2. Preferably, the air jet emitted from the receiving half-shell 803, or the emitting half-shell 802, is also directed along the longitudinal axis of extension of the detecting channel 2 so as to strengthen the longitudinal cleaning flow of the compressed air delivered from the emitting half-shell 802, or the receiving half-shell 803 respectively.

The first cleaning opening 812 and the second cleaning opening 813 are, therefore, both suitably positioned and operate in conjunction with each other to generate the cleaning flow.

According to a version shown in Figures 10 to 14, the first cleaning opening 812 and the second cleaning opening 813 lie in a first plane perpendicular to the pass-through direction D so that they face each other. For example, the first cleaning opening 812 and the second cleaning opening 813 are aligned, so as to obtain symmetrically emitted air jets in the detecting channel 2.

The cleaning circuit comprises a third cleaning opening 814 in the emitting half-shell 802, or the receiving half-shell 803 to deliver compressed air from the emitting half-shell 802, or the receiving half-shell 803 and a fourth cleaning opening 815 in the receiving half-shell 803, or the emitting half-shell 802, to deliver compressed air from the receiving half-shell 803, or the emitting half-shell 802. The third cleaning opening 814 and the fourth cleaning opening 815 lie in a second plane perpendicular to the pass-through direction D so that they face each other. For example, the third cleaning opening 814 and the fourth cleaning opening 815 are also aligned, so as to obtain symmetrically emitted air jets in the detecting channel 2.

The first cleaning opening 812, the second cleaning opening 813, the third cleaning opening 814 and the fourth cleaning opening 815 all lie in the same plane parallel to the pass-through direction D and also parallel to the bottom wall 201 of the detecting channel.

Preferably, the first cleaning opening 812, the second cleaning opening 813, the third cleaning opening 814 and the fourth cleaning opening 815 are near to the bottom wall 201 of the detecting channel 2. Those openings 812, 813, 814, 815 are preferably circular but may also be shaped like a crack, or shaped differently, with regard to the cleaning flow to be obtained.

It should be noticed that the positioning of those cleaning openings 812, 813, 814 and 815 in the emitting half-shell 802 and/or in the receiving half-shell 803 may also be different to that shown in Figures 10 to 14, provided that a longitudinal cleaning flow is generated which is capable of conveying out of the detecting channel 2 any unwanted extraneous bodies and/or fluid substances present in it.

The detector 1 comprises an emitting wall 202 and a receiving wall 203 which face each other and laterally delimit the detecting channel 2. The emitting wall 202 and the receiving wall 203 extend from the bottom wall 201.

The emitting wall 202 comprises a pair of external emitting portions 816', 816" of the emitting half-shell 802. The receiving wall 203 comprises a pair of external receiving portions 817', 817" of the receiving half-shell 803.

In detail, the emitting zone 902 is located between the external emitting portions 816' and 816", the receiving zone 903 is located between the external receiving portions 817', 817". In other words, the external emitting portions 816', 816" are located at the sides of the emitting zone 902, the external receiving portions 817', 817" are located at the sides of the receiving zone 903.

It should be noticed that the external emitting portions 816', 816" face the external receiving portions 817', 817" and define a first pair of facing external portions 816'; 817', and a second pair of facing external portions 816"; 817", respectively.

The first cleaning opening 812 is located in one of the external emitting portions 816', or 816", or in one of the external receiving portions 817', 817".

The first cleaning opening 812 and the second cleaning opening 813 are located in the first pair of external portions 816', 817'.

The third cleaning opening 814 and the fourth cleaning opening 815 are located in the second pair of external portions 816", 817".

The detector 1 additionally comprises a compressed air feed connector 3 which is fixed to the base wall 801.

The cleaning circuit 811 comprises a first distributing section 818, formed in the emitting half-shell 802, or the receiving half-shell 803, to feed compressed air to the first cleaning opening 812. Additionally, the cleaning circuit 811 comprises a connecting section 819 and an inlet section 820, which are formed in the base wall 801.

The connecting section 819 is connected to the feed connector 3 to receive compressed air and to feed compressed air to the inlet section 820. The inlet section 820 is connected to the connecting section 819 and is also connected to the first distributing section 818 at a first distribution point 818a. The inlet section 820 is configured to receive compressed air from the connecting section 819 and to feed compressed air to the distributing section 818.

Thanks to the fact that the first distributing section 818 for the compressed air is formed in the emitting half-shell 802, or the receiving half-shell 803, and that the inlet section 829 and the connecting section 819 are formed in the base wall 801, the cleaning circuit 811 is entirely formed in the body 8 of the detector 1 and it is therefore only necessary to feed compressed air to the feed connector 3, the cleaning circuit 811 consequently having reduced dimensions and overall space outside the detector 1. Advantageously, the feed connector 3 is positioned alongside the emitting connector 6 and the receiving connector 7 in the base wall 801 and therefore the detector 1 has a single wall, the base wall 801, set up for external connections.

According to a version shown in Figure 12, the detector 1 comprises a temperature sensor 10 capable of detecting an internal temperature of the detector 1 for, if necessary, modifying the measurements carried out, if the electromagnetic field detected is affected by the internal temperature. Advantageously, the detector 1 shown in Figures 1 to 9 may also comprise the temperature sensor 10.

The detector 1 comprises a second distributing section 821 to feed compressed air to the second cleaning opening 813, the second distributing section being formed in the receiving half-shell 803, or the emitting half-shell 802, and connected to the inlet section 820 at a second distribution point 821a. The first distribution point 818a and the second distribution point 821a are connected to each other by a first straight stretch of the inlet section 820.

The detector 1 comprises a third distributing section 822 to feed compressed air to the third cleaning opening 814 and a fourth distributing section 823 to feed compressed air to the fourth cleaning opening 815. The third distributing section 822 is formed in the emitting half-shell 802, or the receiving half-shell 803, the fourth distributing section 823 is formed in the receiving half-shell 803, or the emitting half-shell 802, and they are connected to the inlet section 820 at a respective third distribution point 822a and fourth distribution point 823a. The third distribution point 822a and the fourth distribution point 823a are connected to each other by a second straight stretch of the inlet section 820.

The inlet section 820 is in the form of a closed loop.

It should be noticed that the first distribution point 818a and the third distribution point 822a are connected to each other by a third straight stretch of the inlet section 820, the second distribution point 821a and the fourth distribution point 823a are connected to each other by a fourth straight stretch of the inlet section 820. In this way, the first straight stretch, the second straight stretch, the third straight stretch and the fourth straight stretch define the inlet section 820 in the form of a closed loop.

Each distributing section, between the first distributing section 818, the second distributing section 821, the third distributing section 822 and the fourth distributing section 823, comprises a first duct 818', 821', 822', 823' and a second duct 818", 821", 822", 823". The first duct 818', 821', 822', 823' leads into the respective cleaning opening 812, 813, 814, 815, whilst the second duct 818", 821", 822", 823" is connected to the inlet section 820. Preferably, the first duct 818', 821', 822', 823' is linear and is perpendicular to the respective emitting wall 202, or receiving wall 203 and the second duct 818", 821", 822", 823" is perpendicular to the first duct 818', 821', 822', 823'.

What was previously said about the fact that the entire cleaning circuit 811 is formed in the body 8 of the detector 1 still applies. That allows a compact detector to be obtained.

The cleaning circuit 811 is also configured to deliver compressed air internally, into the emitting cavity 805 of the emitting half-shell 802 and into the receiving cavity 806 of the receiving half-shell 803, in such a way as to maintain an overpressure in them.

Indeed, the cleaning circuit 811 comprises at least one internal emitting opening 824 located in the emitting half-shell 802, to deliver compressed air into the emitting cavity 805 and at least one internal receiving opening 825 located in the receiving half-shell 803, to deliver compressed air into the receiving cavity 806.

In this way, compressed air is delivered, and, that is to say, an overpressure is maintained in both the emitting cavity 805 and the receiving cavity 806 in order to prevent any unwanted fluid substances and/or extraneous bodies from entering the cavities 805, 806.

In detail, it should be noticed that the internal emitting opening 824 and the internal receiving opening 825 are connected, respectively, to the third straight stretch and to the fourth straight stretch of the inlet section 820 which are respectively positioned at the emitting half-shell 802 and the receiving half-shell 803.

If, as already indicated, the detector 1 is installed in the apparatus for conveying and inspecting the semi-finished product containing tobacco particles, and the detecting channel is configured to slidably receive, in the pass-through direction, at least one portion of the suction belt, at least one portion of the tobacco held on the suction belt and the guide elements which delimit the suction belt, the cleaning circuit 811 is configured to clean from the detecting channel 2 any extraneous bodies such as tobacco particles released by the suction belt. In detail, the cleaning circuit is configured to clean two portions of the detecting channel 2, each portion being defined between a guide element and the corresponding emitting wall 202, or receiving wall 203.

In use, the cleaning circuit 811 of the detector 1 receives compressed air from the feed connector 3 and delivers compressed air into the detecting channel 2 to clean from the detecting channel 2 unwanted fluid substances and/or any bodies in suspension which may be present.

The cleaning circuit 811 delivers into the detecting channel 2 cleaning air jets capable of creating a longitudinal cleaning flow directed towards the outside of the detecting channel 2, capable of conveying out of the detecting channel 2 any extraneous bodies present in it and capable of preventing any further extraneous bodies in suspension from accessing the detecting channel 2.

If the detector 1 is integrated in a conveying and inspecting apparatus, in which the detecting channel 2 receives the suction belt laterally delimited by guide elements, the cleaning flow acts between the emitting wall 202 and one guide element and between the receiving wall 203 and the other guide element. In addition, the cleaning circuit 811 creates an overpressure in the emitting cavity 805 and in the receiving cavity 806 to prevent extraneous bodies from being able to enter and remain trapped in internal parts of the detector 1.

The compressed air is delivered at regular intervals, which may change over time in terms of delivery duration and delivery pressure, or the compressed air may be delivered continuously.

It should be noticed that what was previously said with reference to the detector 1 comprising the angled emitting probe 4 and receiving probe 5 may also advantageously be applied to the detector 1 of Figures 10 to 14 comprising the cleaning circuit 801.

Indeed, both of the variants of the detector 1 are advantageously and simultaneously applicable, if necessary, to obtain a compact detector 1, which is easy to make and can guarantee effective detection of quality characteristics of a product made to pass through the detecting channel 2 of the detector 1.

## Claims

1. An electromagnetic detector (1) for detecting one or more properties of a product, for example a rod-shaped article, or a semi-finished product, of the tobacco industry, comprising a detecting channel (2) which is open on three sides to allow the product to pass through the electromagnetic detector (1) along a pass-through direction (D), wherein in the detecting channel (2) is located an electromagnetic field, **characterized in that** the electromagnetic detector (1) comprises a cleaning circuit (811) for removing unwanted fluid substances and/or extraneous bodies from the detecting channel (2) and which is configured to deliver compressed air into the detecting channel (2), wherein the detector (1) comprises: a body (8) which is hollow and comprises a base wall (801), an emitting half-shell (802) and a receiving half-shell (803) which extend from the base wall (801); wherein the cleaning circuit (811) comprises at least a first cleaning opening (812) in the emitting half-shell (802), or in the receiving half-shell (803), to deliver compressed air from the emitting half-shell (802), or from the receiving half-shell (803).

2. The detector according to claim 1, wherein the cleaning circuit (811) comprises a second cleaning opening (813) in the receiving half-shell (803), or in the emitting half-shell (802) to deliver compressed air from the receiving half-shell (803), or from the emitting half-shell (802).

3. The detector according to claim 2, wherein the first cleaning opening (812) and the second cleaning opening (813) lie in a first plane perpendicular to the pass-through direction (D) so that they face each other.

4. The detector according to claim 3, wherein the cleaning circuit (811) comprises a third cleaning opening (814) in the emitting half-shell (802), or in the receiving half-shell (803) to deliver compressed air from the emitting half-shell (802), or from the receiving half-shell (803), and a fourth cleaning opening (815) in the receiving half-shell (803), or in the emitting half-shell (802), to deliver compressed air from the receiving half-shell (803), or from the emitting half-shell (802), wherein the third cleaning opening (814) and the fourth cleaning opening (815) lie in a second plane perpendicular to the pass-through direction (D) so that they face each other.

5. The detector according to claim 4, wherein the first cleaning opening (812), the second cleaning opening (813), the third cleaning opening (814) and the fourth cleaning opening (815) all lie in the same plane parallel to the pass-through direction (D) and to a bottom wall (201) of the detecting channel (2).

6. The detector according to any one of the preceding claims, wherein the emitting half-shell (802) and the receiving half-shell (803) are parallel to each other and wherein the detector (1) comprises a dielectric sheath housed in the body (8) and centrally interposed between the emitting half-shell (802) and the receiving half-shell (803) and which is surrounded by the emitting half-shell (802) and by the receiving half-shell (803); an emitting wall (202) and a receiving wall (203) which face each other and laterally delimit the detecting channel (2); and wherein the emitting wall (202) comprises a pair of first external portions (816', 816") of the emitting half-shell (802) and the receiving wall (203) comprises a pair of second external portions (817', 817") of the receiving half-shell (803); wherein the first external portions (816', 816") face the second external portions (817', 817") and define a first pair of facing external portions (816'; 817') and a second pair of facing external portions (816"; 817"), respectively; and wherein the first cleaning opening (812) is located in an external portion of the first pair of external portions (816'; 817'), or of the second pair of external portions (816"; 817").

7. The detector according to claim 6, wherein the dielectric sheath (9) comprises an emitting zone (902) and a receiving zone (903) which face each other to define, in between them, a detecting chamber forming part of the detecting channel (2) in which the electromagnetic field (3) is located; and wherein the emitting zone (902) is located between the pair of first external portions (816', 816") and the receiving zone (903) is located between the pair of second external portions (816"; 817").

8. The detector according to claim 6 or 7, when dependent on claims 4 or 5, wherein the first cleaning opening (812) and the second cleaning opening (813) are located in the first pair of facing external portions (816'; 817') and wherein the third cleaning opening (814) and the fourth cleaning opening (815) are located in the second pair of facing external portions (816"; 817").

9. The detector according to any one of the preceding claims, wherein the electromagnetic detector (1) comprises a compressed air feed connector (3) which is fixed to the base wall (801) and wherein the cleaning circuit (811) comprises: a first distributing section (818), formed in the emitting half-shell (802), or the receiving half-shell (803), to feed compressed air to the first cleaning opening (812); a connecting section (819) and an inlet section (820) which are formed in the base wall (801) and wherein the connecting section (819) is connected to the feed connector (3) to receive compressed air from the feed connector (3) and to feed compressed air to the inlet section (820).

10. The detector according to claim 9, and wherein the inlet section (820) is connected to the connecting section (819) and also to the first distributing section (818) at a first distribution point (818a) to receive compressed air from the connecting section (819) and to feed compressed air to the distributing section (818).

11. The detector according to claim 9 or 10, when dependent on any one of claims 2 to 8, wherein the electromagnetic detector (1) comprises a second distributing section (821), formed in the receiving half-shell (803), or the emitting half-shell (802) to feed compressed air to the second cleaning opening (813), and connected to the inlet section (820) at a second distribution point (821a) to receive compressed air from the inlet section (820), and wherein the first distribution point (818a) and the second distribution point (821a) are connected to each other by a first straight stretch of the inlet section (820).

12. The detector according to claim 11, when dependent on any one of claims 4 to 8, wherein the electromagnetic detector (1) comprises a third distributing section (822) to feed compressed air to the third cleaning opening (814) and a fourth distributing section (823) to feed compressed air to the fourth cleaning opening (815), wherein the third distributing section (822) is formed in the emitting half-shell (802), or the receiving half-shell (803), and the fourth distributing section (823) is formed in the receiving half-shell (803), or the emitting half-shell (802), and they are connected to the inlet section (820) at a respective third distribution point (822a) and fourth distribution point (823a) to receive compressed air from the inlet section (820), and wherein the third distribution point (822a) and the fourth distribution point (823a) are connected to each other by a second straight stretch of the inlet section (820).

13. The detector according to claim 12, wherein the first distribution point (818a) and the third distribution point (822a) are connected to each other by a third straight stretch of the inlet section (820) and wherein the second distribution point (821a) and the fourth distribution point (823a) are connected to each other by a fourth straight stretch of the inlet section (820) and define an inlet section (820) in the form of a closed loop.

14. The detector according to one or more of claims 9 to 13, when dependent on any one of claims 6 to 8, wherein each distributing section (818; 821; 822; 823), between the first distributing section (818), the second distributing section (821), the third distributing section (822) and the fourth distributing section (823), comprises a first duct (818'; 821'; 822'; 823') and a second duct (818"; 821"; 822"; 823"), wherein the first duct (818'; 821'; 822'; 823') leads into the respective cleaning opening (812; 813; 814; 815) and the second duct (818"; 821"; 822"; 823") is connected to the inlet section (820), and wherein the first duct (818'; 821'; 822'; 823') is preferably linear and is perpendicular to the respective emitting wall (202) or receiving wall (203) and the second duct (818"; 821"; 822"; 823") is perpendicular to the first duct (818'; 821'; 822'; 823').

15. The detector according to any one of the preceding claims, wherein the electromagnetic field in the detecting channel (2) is oriented in a detecting direction (D) parallel to the pass-through direction; and wherein the electromagnetic detector (1) comprises an emitting probe (4) for creating the electromagnetic field and a receiving probe (5) to receive an electromagnetic field altered by the presence of the product, the probes (4, 5) being disposed inside the electromagnetic detector (1); wherein the electromagnetic detector (1) is a microwave detector and operates, for example, at a wavelength of between 10⁹ and 10¹² Hz to measure the density and/or the humidity of the product.

16. The detector according to any one of the preceding claims, wherein the detector (1) comprises a dielectric sheath housed in the body (8) and centrally interposed between the emitting half-shell (802) and the receiving half-shell (803) and which is surrounded by the emitting half-shell (802) and by the receiving half-shell (803) and delimits an emitting cavity (805) in the emitting half-shell (802) and a receiving cavity (806) in the receiving half-shell (803), the cleaning circuit (811) being configured to deliver compressed air into the emitting cavity (805) of the emitting half-shell (802) and/or into the receiving cavity (806) of the receiving half-shell (803).

17. The detector according to claim 16, wherein the cleaning circuit (811) comprises at least a first internal opening (824) located in the emitting half-shell (802) to deliver compressed air into the emitting cavity (805) and at least a second internal opening (825) located in the receiving half-shell (806) to deliver compressed air into the receiving cavity (806) in order to prevent any unwanted fluid substances and/or extraneous bodies from entering the emitting cavity (805) and/or the receiving cavity (806), respectively.

18. The detector according to any one of the preceding claims, wherein the detector (1) comprises: a body (8) which is hollow and comprises a base wall (801), an emitting half-shell (802) and a receiving half-shell (803) which extend from the base wall (801); the cleaning circuit (811) being entirely formed in the body (8) of the detector (1).

19. An apparatus for conveying and inspecting a product of the tobacco industry, where the product is a semi-finished product containing tobacco particles and comprises:
- a belt conveyor configured to hold and convey the semi-finished product along a conveying path which comprises a guide channel delimited at the sides by two side walls and at the top by a belt, preferably a suction belt;
- an electromagnetic detector (1) according to any one of claims 1 to 18 wherein the detecting channel (2) is configured to slidably receive, in the pass-through direction (D), at least one portion of the belt and at least one portion of the semi-finished product held on the belt and the cleaning circuit (811) is configured to remove from the detecting channel (2) any fluid substances and/or extraneous bodies, such as tobacco particles released by the belt.

20. An apparatus for conveying and inspecting a product of the tobacco industry, where the product is a semi-finished product containing tobacco particles and comprises:
- a belt conveyor configured to hold and convey the semi-finished product along a conveying path which comprises a guide channel delimited at the sides by two side walls and at the top by a belt, preferably a suction belt;
- an electromagnetic detector (1) according to any one of claims 1 to 18, wherein the cleaning circuit (811) comprises at least a first internal opening (824) to deliver compressed air into the emitting cavity (805) and/or at least a second internal opening (825) to deliver compressed air into the receiving cavity (806) in order to prevent any fluid substances and/or extraneous bodies from entering the cavities (805; 806).

## Patentansprüche

1. Elektromagnetischer Detektor (1) zur Erfassung von einer oder mehreren Eigenschaften eines Produkts, beispielsweise eines stabförmigen Artikels oder eines Halbzeugs der tabakverarbeitenden Industrie, umfassend einen Erfassungskanal (2), der an drei Seiten offen ist, um dem Produkt zu erlauben, durch den elektromagnetischen Detektor (1) entlang einer Durchführungsrichtung (D) geführt zu werden, wobei im Erfassungskanal (2) ein elektromagnetisches Feld befindlich ist, **dadurch gekennzeichnet, dass** der elektromagnetische Detektor (1) einen Reinigungskreislauf (811) zum Entfernen unerwünschter Fluidsubstanzen und/oder Fremdkörper aus dem Erfassungskanal (2) umfasst, der ausgelegt ist, um in den Erfassungskanal (2) Druckluft einzuleiten, wobei der Detektor (1) Folgendes umfasst: einen Körper (8), der hohl ist und eine Basiswand (801) umfasst, eine Abgabehalbschale (802) und eine Aufnahmehalbschale (803), die sich von der Basiswand (801) erstrecken, wobei der Reinigungskreislauf (811) mindestens eine erste Reinigungsöffnung (812) in der Abgabehalbschale (802) oder in der Aufnahmehalbschale (803) umfasst, um Druckluft von der Abgabehalbschale (802) oder der Aufnahmehalbschale (803) zuzuführen.

2. Detektor nach Anspruch 1, wobei der Reinigungskreislauf (811) eine zweite Reinigungsöffnung (813) in der Aufnahmehalbschale (803) oder in der Abgabehalbschale (802) umfasst, um Druckluft von der Aufnahmehalbschale (803) oder der Abgabehalbschale (802) zuzuführen.

3. Detektor nach Anspruch 2, wobei die erste Reinigungsöffnung (812) und die zweite Reinigungsöffnung (813) in einer ersten Ebene liegen, die rechtwinkelig zur Durchführungsrichtung (D) angeordnet ist, sodass sie einander zugewandt sind.

4. Detektor nach Anspruch 3, wobei der Reinigungskreislauf (811) eine dritte Reinigungsöffnung (814) in der Abgabehalbschale (803) oder in der Aufnahmehalbschale (802) umfasst, um Druckluft von der Abgabehalbschale (803) oder der Aufnahmehalbschale (802) zuzuführen, und eine vierte Reinigungsöffnung (815) in der Aufnahmehalbschale (803) oder der Abgabehalbschale (802), um Druckluft von der Aufnahmehalbschale (803) oder der Abgabehalbschale (802) zuzuführen, wobei die dritte Reinigungsöffnung (814) und die vierte Reinigungsöffnung (815) in einer zweiten Ebene liegen, die rechtwinkelig zur Durchführungsrichtung (D) angeordnet ist, sodass sie einander zugewandt sind.

5. Detektor nach Anspruch 4, wobei die erste Reinigungsöffnung (812), die zweite Reinigungsöffnung (813), die dritte Reinigungsöffnung (814) und die vierte Reinigungsöffnung (815) alle in der gleichen Ebene parallel zur Durchführungsrichtung (D) und zur Bodenwand (201) des Erfassungskanals (2) liegen.

6. Detektor nach einem der vorhergehenden Ansprüche, wobei die Abgabehalbschale (802) und die Aufnahmehalbschale (803) parallel zueinander angeordnet sind und wobei der Detektor (1) einen dielektrischen Mantel umfasst, der im Körper (8) untergebracht und mittig zwischen der Abgabehalbschale (802) und der Aufnahmehalbschale (803) eingesetzt und von der Abgabehalbschale (802) und der Aufnahmehalbschale (803) umgeben ist, wobei eine Abgabewand (202) und eine Aufnahmewand (203) einander zugewandt sind und den Erfassungskanal (2) seitlich begrenzen und wobei die Abgabewand (202) ein Paar erster externer Abschnitte (816', 816") der Abgabehalbschale (802) umfasst und die Aufnahmewand (203) ein Paar zweiter externer Abschnitte (817', 817") der Aufnahmehalbschale (803) umfasst, wobei die ersten externen Abschnitte (816', 816") den zweiten externen Abschnitten (817', 817") zugewandt sind und jeweils ein erstes Paar von zugewandten externen Abschnitten (816'; 817') bzw. ein zweites Paar von zugewandten externen Abschnitten (816"; 817") definieren, wobei die erste Reinigungsöffnung (812) in einem externen Abschnitt des ersten Paars externer Abschnitte (816'; 817') oder des zweiten Paars externer Abschnitte (816"; 817") befindlich sind.

7. Detektor nach Anspruch 6, wobei der dielektrische Mantel (9) eine Abgabezone (902) und eine Aufnahmezone (903) umfasst, die einander zugewandt sind, um zwischen ihnen eine Erfassungskammer zu definieren, die einen Teil des Erfassungskanals (2) formt, in dem das elektromagnetische Feld (3) befindlich ist, und wobei die Abgabezone (902) zwischen dem Paar erster externer Abschnitte (816', 816") befindlich ist und die Aufnahmezone (903) zwischen dem Paar zweiter externer Abschnitte (816"; 817") befindlich ist.

8. Detektor nach Anspruch 6 oder 7, wenn abhängig von Anspruch 4 oder 5, wobei die erste Reinigungsöffnung (812) und die zweite Reinigungsöffnung (813) im ersten Paar von sich einander zugewandten externen Abschnitten (816'; 817') befindlich sind und wobei die dritte Reinigungsöffnung (814) und die vierte Reinigungsöffnung (815) im zweiten Paar von sich einander zugewandten Abschnitten (816"; 817") befindlich sind.

9. Detektor nach einem der vorhergehenden Ansprüche, wobei der elektromagnetische Detektor (1) einen Druckluftzuführungsverbinder (3) umfasst, der an der Basiswand (801) fixiert ist, und wobei der Reinigungskreislauf (811) Folgendes umfasst: eine erste Verteilungssektion (818), die in der Abgabehalbschale (802) oder der Aufnahmehalbschale (803) ausgeformt ist, um der ersten Reinigungsöffnung (812) Druckluft zuzuführen, eine Verbindungssektion (819) und eine Einlasssektion (820), die in der Basiswand (801) ausgeformt sind, und wobei die Verbindungssektion (819) mit dem Zuführungsverbinder (3) verbunden ist, um Druckluft vom Zuführungsverbinder (3) zu empfangen und der Einlasssektion (820) Druckluft zuzuführen.

10. Detektor nach Anspruch 9, wobei die Einlasssektion (820) mit der Verbindungssektion (819) und auch mit der ersten Verteilungssektion (818) an einem ersten Verteilungspunkt (818a) verbunden ist, um Druckluft von der Verbindungssektion (819) zu empfangen und der Verteilungssektion (818) Druckluft zuzuführen.

11. Detektor nach Anspruch 9 oder 10, wenn abhängig von einem der Ansprüche 2 bis 8, wobei der elektromagnetische Detektor (1) eine zweite Verteilungssektion (821) umfasst, die in der Aufnahmehalbschale (803) oder der Abgabehalbschale (802) ausgeformt ist, um der zweiten Reinigungsöffnung (813) Druckluft zuzuführen, und die mit der Einlasssektion (820) an einem zweiten Verteilungspunkt (821a) verbunden ist, um Druckluft von der Einlasssektion (820) zu empfangen, wobei der erste Verteilungspunkt (818a) und der zweite Verteilungspunkt (821a) durch ein erstes gerades Teilstück der Einlasssektion (820) miteinander verbunden sind.

12. Detektor nach Anspruch 11, wenn abhängig von einem der Ansprüche 4 bis 8, wobei der elektromagnetische Detektor (1) eine erste Verteilungssektion (822) umfasst, um der dritten Reinigungsöffnung (814) Druckluft zuzuführen, und eine vierte Verteilungssektion (823), um der vierten Reinigungsöffnung (815) Druckluft zuzuführen, wobei die dritte Verteilungssektion (822) in der Abgabehalbschale (802) oder der Aufnahmehalbschale (803) ausgeformt ist und die vierte Verteilungssektion (823) in der Aufnahmehalbschale (803) oder der Abgabehalbschale (802) ausgeformt ist, wobei diese mit der Einlasssektion (820) an einem jeweiligen dritten Verteilungspunkt (822a) und einem vierten Verteilungspunkt (823a) verbunden sind, um Druckluft von der Einlasssektion (820) zu empfangen, und wobei der dritte Verteilungspunkt (822a) und der vierte Verteilungspunkt (823a) durch ein zweites gerades Teilstück der Einlasssektion (820) miteinander verbunden sind.

13. Detektor nach Anspruch 12, wobei der erste Verteilungspunkt (818a) und der dritte Verteilungspunkt (822a) miteinander durch ein drittes gerades Teilstück der Einlasssektion (820) verbunden sind, und wobei der zweite Verteilungspunkt (821a) und der vierte Verteilungspunkt (823a) miteinander durch ein viertes gerades Teilstück der Einlasssektion (820) verbunden sind und eine Einlasssektion (820) in der Form einer geschlossenen Schleife definieren.

14. Detektor nach einem oder mehreren der Ansprüche 9 bis 13, wenn abhängig von einem der Ansprüche 6 bis 8, wobei eine jede Verteilungssektion (818; 821; 822; 823), also sowohl die erste Verteilungssektion (818) als auch die zweite Verteilungssektion (821), die dritte Verteilungssektion (822) und die vierte Verteilungssektion (823), eine erste Leitung (818'; 821'; 822'; 823') und eine zweite Leitung (818"; 821"; 822"; 823") umfasst, wobei die erste Leitung (818'; 821'; 822'; 823') in die jeweilige Reinigungsöffnung (812; 813; 814; 815) führt und die zweite Leitung (818"; 821"; 822"; 823") mit der Einlasssektion (820) verbunden ist, wobei die erste Leitung (818'; 821'; 822'; 823') vorzugsweise linear ist und senkrecht zur jeweiligen Abgabewand (202) oder Aufnahmewand (203) angeordnet ist und die zweite Leitung (818"; 821"; 822"; 823") rechtwinkelig zur ersten Leitung (818'; 821'; 822'; 823') angeordnet ist.

15. Detektor nach einem der vorhergehenden Ansprüche, wobei das elektromagnetische Feld im Erfassungskanal (2) in eine Erfassungsrichtung (D) ausgerichtet ist, die parallel zur Durchführungsrichtung angeordnet ist, und wobei der elektromagnetische Detektor (1) eine Abgabesonde (4) umfasst, um das elektromagnetische Feld zu erzeugen, und eine Aufnahmesonde (5), um ein durch das Produkt verändertes elektromagnetisches Feld aufzunehmen, wobei die Sonden (4, 5) im elektromagnetischen Detektor (1) angeordnet sind, wobei der elektromagnetische Detektor (1) ein Mikrowellendetektor ist und beispielsweise bei einer Wellenlänge von 10⁹ bis 10¹² Hz arbeitet, um die Dichte und/oder Feuchtigkeit des Produkts zu messen.

16. Detektor nach einem der vorhergehenden Ansprüche, wobei der Detektor (1) einen dielektrischen Mantel umfasst, der im Körper (8) untergebracht und mittig zwischen der Abgabehalbschale (802) und der Aufnahmehalbschale (803) eingesetzt und von der Abgabehalbschale (802) und von der Aufnahmehalbschale (803) umgeben ist und einen Abgabehohlraum (805) in der Abgabehalbschale (802) und einen Aufnahmehohlraum (806) in der Aufnahmehalbschale (803) begrenzt, wobei der Reinigungskreislauf (811) ausgelegt ist, um Druckluft in den Abgabehohlraum (805) der Abgabehalbschale (802) und/oder den Aufnahmehohlraum (806) der Aufnahmehalbschale (803) einzuleiten.

17. Detektor nach Anspruch 16, wobei der Reinigungskreislauf (811) mindestens eine erste interne Öffnung (824) umfasst, die in der Abgabehalbschale (802) befindlich ist, um Druckluft in den Abgabehohlraum (805) einzuleiten, und mindestens eine zweite interne Öffnung (825), die in der Aufnahmehalbschale (806) befindlich ist, um Druckluft in den Aufnahmehohlraum (806) einzuleiten, um zu verhindern, dass unerwünschte Fluidsubstanzen und/oder Fremdkörper jeweils in den Abgabehohlraum (805) und/oder den Aufnahmehohlraum (806) eindringen.

18. Detektor nach einem der vorhergehenden Ansprüche, wobei der Detektor (1) Folgendes umfasst: einen Körper (8), der hohl ist und eine Basiswand (801), eine Abgabehalbschale (802) und eine Aufnahmehalbschale (803) umfasst, die sich von der Basiswand (801) erstrecken, wobei der Reinigungskreislauf (811) in vollem Umfang im Körper (8) des Detektors (1) ausgeformt ist.

19. Gerät zur Förderung und Prüfung eines Produkts der tabakverarbeitenden Industrie, wobei es sich beim Produkt um ein Tabakteilchen enthaltendes Halbzeug handelt, wobei das Gerät Folgendes umfasst:
- einen Bandförderer, der ausgelegt ist, um das Halbzeug entlang eines Förderwegs, der einen Führungskanal umfasst, der an den Seiten durch zwei Seitenwände und an der Oberseite durch ein Band, vorzugsweise ein Saugband, begrenzt ist, zu halten und zu fördern;
- einen elektromagnetischen Detektor (1) nach einem der Ansprüche 1 bis 18, wobei der Erfassungskanal (2) ausgelegt ist, um in der Durchführungsrichtung (D) verschiebbar mindestens einen Abschnitt des Bands und mindestens einen Abschnitt des auf dem Band gehaltenen Halbzeugs aufzunehmen, und der Reinigungskreislauf (811) ausgelegt ist, um aus dem Erfassungskanal (2) sämtliche Fluidsubstanzen und/oder Fremdkörper wie vom Band freigesetzte Tabakteilchen zu entfernen.

20. Gerät zur Förderung und Prüfung eines Produkts der tabakverarbeitenden Industrie, wobei es sich beim Produkt um ein Tabakteilchen enthaltendes Halbzeug handelt, wobei das Gerät Folgendes umfasst:
- einen Bandförderer, der ausgelegt ist, um das Halbzeug entlang eines Förderwegs, der einen Führungskanal umfasst, der an den Seiten durch zwei Seitenwände und an der Oberseite durch ein Band, vorzugsweise ein Saugband, begrenzt ist, zu halten und zu fördern;
- einen elektromagnetischen Detektor (1) nach einem der Ansprüche 1 bis 18, wobei der Reinigungskreislauf (811) mindestens eine erste interne Öffnung (824) zur Einleitung von Druckluft in den Abgabehohlraum (805) und/oder mindestens eine zweite interne Öffnung (825) zur Einleitung von Druckluft in den Aufnahmehohlraum (806) umfasst, um zu verhindern, dass Fluidsubstanzen und/oder Fremdkörper in die Hohlräume (805; 806) eindringen.

## Revendications

1. Détecteur électromagnétique (1) pour la détection d'une ou plusieurs propriétés d'un produit, par exemple un article en forme de tige ou un produit semi-fini, de l'industrie du tabac, comprenant un canal de détection (2) étant ouvert sur trois côtés pour permettre au produit de passer à travers le détecteur électromagnétique (1) le long d'une direction de passage (D), dans lequel un champ électromagnétique est situé dans le canal de détection (2), **caractérisé en ce que** le détecteur électromagnétique (1) comprend un circuit de nettoyage (811) pour retirer des substances fluides indésirables et/ou des corps étrangers du canal de détection (2) et qui est configuré pour délivrer de l'air comprimé dans le canal de détection (2), dans lequel le détecteur (1) comprend : un corps (8) étant creux et comprenant une paroi de base (801), une demi-coque d'émission (802) et une demi-coque de réception (803) qui se prolongent à partir de la paroi de base (801) ; dans lequel le circuit de nettoyage (811) comprend au moins une première ouverture de nettoyage (812), dans la demi-coque d'émission (802) ou dans la demi-coque de réception (803), pour délivrer de l'air comprimé à partir de la demi-coque d'émission (802) ou à partir de la demi-coque de réception (803).

2. Détecteur selon la revendication 1, dans lequel le circuit de nettoyage (811) comprend une deuxième ouverture de nettoyage (813), dans la demi-coque de réception (803) ou dans la demi-coque d'émission (802), pour délivrer de l'air comprimé à partir de la demi-coque de réception (803) ou de la demi-coque d'émission (802).

3. Détecteur selon la revendication 2, dans lequel la première ouverture de nettoyage (812) et la deuxième ouverture de nettoyage (813) reposent dans un premier plan perpendiculaire à la direction de passage (D) de sorte qu'elles se font face.

4. Détecteur selon la revendication 3, dans lequel le circuit de nettoyage (811) comprend une troisième ouverture de nettoyage (814), dans la demi-coque d'émission (802) ou dans la demi-coque de réception (803), pour délivrer de l'air comprimé à partir de la demi-coque d'émission (802) ou de la demi-coque de réception (803), et une quatrième ouverture de nettoyage (815), dans la demi-coque de réception (803) ou dans la demi-coque d'émission (802), pour délivrer de l'air comprimé à partir de la demi-coque de réception (803) ou de la demi-coque d'émission (802), dans lequel la troisième ouverture de nettoyage (814) et la quatrième ouverture de nettoyage (815) reposent dans un deuxième plan perpendiculaire à la direction de passage (D) de sorte qu'elles se font face l'une l'autre.

5. Détecteur selon la revendication 4, dans lequel la première ouverture de nettoyage (812), la deuxième ouverture de nettoyage (813), la troisième ouverture de nettoyage (814) et la quatrième ouverture de nettoyage (815) reposent toutes dans le même plan parallèle à la direction de passage (D) et à une paroi de fond (201) du canal de détection (2).

6. Détecteur selon l'une quelconque des revendications précédentes, dans lequel la demi-coque d'émission (802) et la demi-coque de réception (803) sont parallèles l'une à l'autre et dans lequel le détecteur (1) comprend une gaine diélectrique logée dans le corps (8) et interposée centralement entre la demi-coque d'émission (802) et la demi-coque de réception (803) et qui est entourée par la demi-coque d'émission (802) et par la demi-coque de réception (803) ; une paroi d'émission (202) et une paroi de réception (203) qui se font face et délimitent latéralement le canal de détection (2) ; et dans lequel la paroi d'émission (202) comprend une paire de premières parties externes (816', 816") de la demi-coque d'émission (802) et la paroi de réception (203) comprend une paire de deuxièmes parties externes (817', 817") de la demi-coque de réception (803) ; dans lequel les premières parties externes (816', 816") font face aux deuxièmes parties externes (817', 817") et définissent, respectivement, une première paire de parties externes se faisant face (816' ; 817') et une deuxième paire de parties externes se faisant face (816" ; 817") ; et dans lequel la première ouverture de nettoyage (812) est située dans une partie externe de la première paire de parties externes (816' ; 817') ou de la deuxième paire de parties externes (816" ; 817").

7. Détecteur selon la revendication 6, dans lequel la gaine diélectrique (9) comprend une zone d'émission (902) et une zone de réception (903) qui se font face pour définir, entre elles, une chambre de détection faisant partie du canal de détection (2) dans lequel est situé le champ électromagnétique (3) ; et dans lequel la zone d'émission (902) est située entre la paire de premières parties externes (816', 816") et la zone de réception (903) est située entre la paire de deuxièmes parties externes (816" ; 817").

8. Détecteur selon la revendication 6 ou 7, lorsqu'elle dépend des revendications 4 ou 5, dans lequel la première ouverture de nettoyage (812) et la deuxième ouverture de nettoyage (813) sont situées dans la première paire de parties externes se faisant face (816' ; 817') et dans lequel la troisième ouverture de nettoyage (814) et la quatrième ouverture de nettoyage (815) sont situées dans la deuxième paire de parties externes se faisant face (816" ; 817").

9. Détecteur selon l'une quelconque des revendications précédentes, dans lequel le détecteur électromagnétique (1) comprend un connecteur d'alimentation en air comprimé (3) qui est fixé à la paroi de base (801) et dans lequel le circuit de nettoyage (811) comprend : une première section de distribution (818), formée dans la demi-coque d'émission (802) ou la demi-coque de réception (803), pour alimenter en air comprimé la première ouverture de nettoyage (812) ; une section de raccordement (819) et une section d'entrée (820) qui sont formées dans la paroi de base (801) et dans lequel la section de raccordement (819) est raccordée au connecteur d'alimentation (3) pour recevoir de l'air comprimé du connecteur d'alimentation (3) et pour alimenter en air comprimé la section d'entrée (820).

10. Détecteur selon la revendication 9, et dans lequel la section d'entrée (820) est reliée à la section de raccordement (819) et également à la première section de distribution (818) à un premier point de distribution (818a) pour recevoir de l'air comprimé de la section de raccordement (819) et pour alimenter en air comprimé la section de distribution (818).

11. Détecteur selon la revendication 9 ou 10, lorsqu'elle dépend de l'une quelconque des revendications 2 à 8, dans lequel le détecteur électromagnétique (1) comprend une deuxième section de distribution (821), formée dans la demi-coque de réception (803) ou la demi-coque d'émission (802), pour alimenter en air comprimé la deuxième ouverture de nettoyage (813), et reliée à la section d'entrée (820) à un deuxième point de distribution (821a) pour recevoir l'air comprimé de la section d'entrée (820), et dans lequel le premier point de distribution (818a) et le deuxième point de distribution (821a) sont reliés l'un à l'autre par un premier tronçon rectiligne de la section d'entrée (820).

12. Détecteur selon la revendication 11, lorsqu'elle dépend de l'une quelconque des revendications 4 à 8, dans lequel le détecteur électromagnétique (1) comprend une troisième section de distribution (822) pour alimenter en air comprimé la troisième ouverture de nettoyage (814) et une quatrième section de distribution (823) pour alimenter en air comprimé la quatrième ouverture de nettoyage (815), dans lequel la troisième section de distribution (822) est formée dans la demi-coque d'émission (802) ou la demi-coque de réception (803), et la quatrième section de distribution (823) est formée dans la demi-coque de réception (803) ou la demi-coque d'émission (802), et elles sont reliées à la section d'entrée (820) à un troisième point de distribution (822a) et un quatrième point de distribution (823a) respectifs pour recevoir l'air comprimé de la section d'entrée (820), et dans lequel le troisième point de distribution (822a) et le quatrième point de distribution (823a) sont reliés l'un à l'autre par un deuxième tronçon rectiligne de la section d'entrée (820).

13. Détecteur selon la revendication 12, dans lequel le premier point de distribution (818a) et le troisième point de distribution (822a) sont reliés l'un à l'autre par un troisième tronçon rectiligne de la section d'entrée (820) et dans lequel le deuxième point de distribution (821a) et le quatrième point de distribution (823a) sont reliés l'un à l'autre par un quatrième tronçon rectiligne de la section d'entrée (820) et définissent une section d'entrée (820) sous la forme d'une boucle fermée.

14. Détecteur selon l'une ou plusieurs des revendications 9 à 13, lorsqu'elles dépendent de l'une quelconque des revendications 6 à 8, dans lequel chaque section de distribution (818 ; 821 ; 822 ; 823), entre la première section de distribution (818), la deuxième section de distribution (821), la troisième section de distribution (822) et la quatrième section de distribution (823), comprend un premier conduit (818' ; 821' ; 822' ; 823') et un deuxième conduit (818" ; 821" ; 822" ; 823"), dans lequel le premier conduit (818' ; 821' ; 822' ; 823') débouche dans l'ouverture de nettoyage respective (812 ; 813 ; 814 ; 815) et le deuxième conduit (818" ; 821" ; 822" ; 823") est relié à la section d'entrée (820), et dans lequel le premier conduit (818' ; 821' ; 822' ; 823') est de préférence linéaire et est perpendiculaire à la paroi d'émission (202) respective ou paroi de réception (203) et le deuxième conduit (818" ; 821" ; 822" ; 823") est perpendiculaire au premier conduit (818' ; 821' ; 822' ; 823').

15. Détecteur selon l'une quelconque des revendications précédentes, dans lequel le champ électromagnétique dans le canal de détection (2) est orienté dans une direction de détection (D) parallèle à la direction de passage ; et dans lequel le détecteur électromagnétique (1) comprend une sonde d'émission (4) pour créer le champ électromagnétique et une sonde de réception (5) pour recevoir un champ électromagnétique modifié par la présence du produit, les sondes (4, 5) étant disposées à l'intérieur du détecteur électromagnétique (1) ; dans lequel le détecteur électromagnétique (1) est un détecteur à micro-ondes et fonctionne, par exemple, à une longueur d'onde comprise entre 10⁹ et 10¹² Hz pour mesurer la densité et/ou l'humidité du produit.

16. Détecteur selon l'une quelconque des revendications précédentes, dans lequel le détecteur (1) comprend une gaine diélectrique logée dans le corps (8) et interposée centralement entre la demi-coque d'émission (802) et la demi-coque de réception (803) et qui est entourée par la demi-coque d'émission (802) et par la demi-coque de réception (803) et délimite une cavité d'émission (805) dans la demi-coque d'émission (802) et une cavité de réception (806) dans la demi-coque de réception (803), le circuit de nettoyage (811) étant configuré pour délivrer de l'air comprimé dans la cavité d'émission (805) de la demi-coque d'émission (802) et/ou dans la cavité de réception (806) de la demi-coque de réception (803).

17. Détecteur selon la revendication 16, dans lequel le circuit de nettoyage (811) comprend au moins une première ouverture interne (824) située dans la demi-coque d'émission (802) pour délivrer de l'air comprimé dans la cavité d'émission (805) et au moins une deuxième ouverture interne (825) située dans la demi-coque de réception (806) pour délivrer de l'air comprimé dans la cavité de réception (806) afin d'empêcher toute substance fluide indésirable et/ou tout corps étranger de pénétrer, respectivement, dans la cavité d'émission (805) et/ou dans la cavité de réception (806).

18. Détecteur selon l'une quelconque des revendications précédentes, dans lequel le détecteur (1) comprend : un corps (8) étant creux et comprenant une paroi de base (801), une demi-coque d'émission (802) et une demi-coque de réception (803) qui se prolongent à partir de la paroi de base (801) ; le circuit de nettoyage (811) étant entièrement formé dans le corps (8) du détecteur (1).

19. Appareil pour transporter et inspecter un produit de l'industrie du tabac, où le produit est un produit semi-fini contenant des particules de tabac, et qui comprend :
- un transporteur à courroie configuré pour maintenir et transporter le produit semi-fini le long d'un parcours de transport qui comprend un canal de guidage délimité sur les côtés par deux parois latérales et sur le dessus par une courroie, de préférence une courroie aspirante ;
- un détecteur électromagnétique (1) selon l'une quelconque des revendications 1 à 18, dans lequel le canal de détection (2) est configuré pour recevoir de manière coulissante, dans la direction de passage (D), au moins une partie de la courroie et au moins une partie du produit semi-fini maintenu sur la courroie, et le circuit de nettoyage (811) est configuré pour retirer du canal de détection (2) toute substance fluide et/ou corps étrangers, tels que les particules de tabac libérées par la courroie.

20. Appareil pour transporter et inspecter un produit de l'industrie du tabac, où le produit est un produit semi-fini contenant des particules de tabac, et qui comprend :
- un transporteur à courroie configuré pour maintenir et transporter le produit semi-fini le long d'un parcours de transport qui comprend un canal de guidage délimité sur les côtés par deux parois latérales et sur le dessus par une courroie, de préférence une courroie aspirante ;
- un détecteur électromagnétique (1) selon l'une quelconque des revendications 1 à 18, dans lequel le circuit de nettoyage (811) comprend au moins une première ouverture interne (824) pour délivrer de l'air comprimé dans la cavité d'émission (805) et/ou au moins une deuxième ouverture interne (825) pour délivrer de l'air comprimé dans la cavité de réception (806) afin d'empêcher toute substance fluide et/ou corps étrangers de pénétrer dans les cavités (805 ; 806).
